# EUROPEAN PATENT SPECIFICATION

(11) **EP 3 816 057 B1**
(45) Date of publication and mention of the grant of the patent: **21.08.2024**
(21) Application number: 19825172.0
(22) Date of filing: 24.06.2019
(51) Int. Cl.: B65B 53/02, B65B 53/06

(54) **HEAT-SHRINKING DEVICE AND HEAT-SHRINKING METHOD FOR HEAT SHRINKABLE LABEL**
WÄRMESCHRUMPFVORRICHTUNG UND WÄRMESCHRUMPFVERFAHREN FÜR WÄRMESCHRUMPFBARE ETIKETTEN
DISPOSITIF DE THERMORÉTRACTION ET PROCÉDÉ DE THERMORÉTRACTION POUR ÉTIQUETTE THERMORÉTRACTABLE

(30) Priority: 29.06.2018 JP 2018125500; 29.06.2018 JP 2018125542
(43) Date of publication of application: 05.05.2021
(73) Proprietor: Shibuya Corporation, Ishikawa 920-8681 (JP)
(72) Inventor: TANIGUCHI, Kohei, Kanazawa-shi, Ishikawa 920-8681 (JP)
(74) Representative: Hoffmann Eitle
(86) International application number: PCT/JP2019/024873
(87) International publication number: WO 2020/004296

(56) References cited:
- WO-A1-2009/133440
- JP-A- 2006 082 834
- JP-A- 2006 082 834
- JP-A- 2007 314 234
- JP-A- H02 139 319
- JP-U- H0 273 104
- US-A1- 2016 137 328

## Description

### [TECHNICAL FIELD]

The present invention relates to a heat-shrink device for a heat-shrink label and a heat-shrink method applying heat to cause heat shrinkage to a heat shrinkable label covering a container.

### [BACKGROUND ART]

There is known a label-heating apparatus that sticks a label tightly on the body of each bottle while transferring bottles covered with labels inside a long rectangular parallelepiped heat-processing chamber that injects steam towards a line of the bottles from nozzles to heat shrink the labels (Japanese Patent Publication No. 6142339). Furthermore, there is also known an apparatus that disposes a bottle in a closed space and blows heated steam around the bottle while reducing the pressure inside the closed space to reduce or eliminate condensate generated when adhering the label to the container (Japanese Patent Publication No. 5318942) .

Further examples of the prior art can be seen in documents JP 2006 082834 A, WO 2009/133440 A1 and JP 2007 314234 A.

### [SUMMARY OF THE INVENTION]

### [PROBLEM TO BE SOLVED BY THE INVENTION]

However, in the label-heating apparatus of Japanese Patent Publication No. 6142339, the temperature in the heat-processing chamber is easily affected by disturbances such as the outside air temperature and thus controlling the temperature inside the heat-processing chamber is difficult. For example, when the number of containers discharged from the upstream device is varied and the pitch widths of the containers are uneven, the temperature in the heat-processing chamber becomes unstable and irregular shrinking. Furthermore, depending on the type of container and label, the conditions for shrinking the label differ depending on the height, so that when the type of container or label is changed, it is necessary to change the positions of the nozzles, and therefore, the initial setting is troublesome. As for the configuration of Japanese Patent Publication No. 5318942, in which bottles are individually processed in the closed space, it is not affected by variations in the number of containers discharged from the upstream device, but it cannot cope with changes in the types of containers and labels.

One object of the present invention is to provide a heat-shrink device for a heat-shrink label that can easily cope with different lots and is not affected by disturbances.

### [MEANS FOR SOLVING THE PROBLEMS]

A heat-shrink device for a heat-shrink label according to claim 1 includes a container-supporting means for supporting a container provided with a heat-shrink label; a heating cylinder arranged below the container-supporting means and capable of accommodating a container supported by the container-supporting means; a heating means for heating the inside of the heating cylinder; an elevating means for relatively raising and lowering the container-supporting means and the heating cylinder; and a control means for controlling the elevating means; the control means being configured to relatively raise and lower the container-supporting means and the heating cylinder so that the bottom of the container is inserted from the upper end of the heating cylinder by the elevating means, and thereby the container is positioned in the heating cylinder for a predetermined time by controlling the speed of the elevating means to heat-shrink the label provided on the container.

In the heat-shrink device for a heat-shrink label of the invention, the heating means includes an injection nozzle that injects steam inside of the heating cylinder, and a steam supply means that supplies steam to the injection nozzle.

In the heat-shrink device for a heat-shrink label of the invention, the heating cylinder includes an inner cylinder, in which the outlet of the injection nozzle facing the inside is provided, and an outer cylinder, in which the upper end extends above the inner cylinder covering at least the upper part of the inner cylinder and which is arranged at a distance from the inner cylinder.

A heat-shrink method according to claim 2 for a heat-shrink label realized by means of the heat-shrink device of the invention includes moving the container-supporting means and the heating cylinder relatively up and down so that the bottom of the container supported by the container-supporting means is inserted from the upper end of the heating cylinder; and by controlling the ascending/descending speed, the container is positioned in the heating cylinder for a predetermined time so that the label provided on the container is thermally shrunk.

The heat-shrink method for a heat-shrink label is based on the heating means which injects steam inside of the heating cylinder.

### [EFFECT OF THE INVENTION]

According to the present invention, a heat-shrink device for heat-shrink labels that can easily cope with different lots and is not affected by disturbances can be provided.

### [BRIEF DESCRIPTION OF THE DRAWINGS]

[Fig. 1] A plan view illustrating the structure of a labeling system of the first embodiment of the present invention.
[Fig. 2] A vertical sectional view of a shrink wheel of the first embodiment.
[Fig. 3] An enlarged vertical sectional view of the shrink wheel of the first embodiment.
[Fig. 4] A figure illustrating the detail of an elevating mechanism of the first embodiment.
[Fig. 5] A side view illustrating an elevating operation of a heating cylinder performed by the elevating mechanism.
[Fig. 6] An enlarged vertical sectional view of the heating cylinder of the second embodiment.
[Fig. 7] An enlarged vertical sectional view of the heating cylinder of the third embodiment.
[Fig. 8] An enlarged plan view of the heating cylinder of the third embodiment.

### [EMBODIMENT OF THE INVENTION]

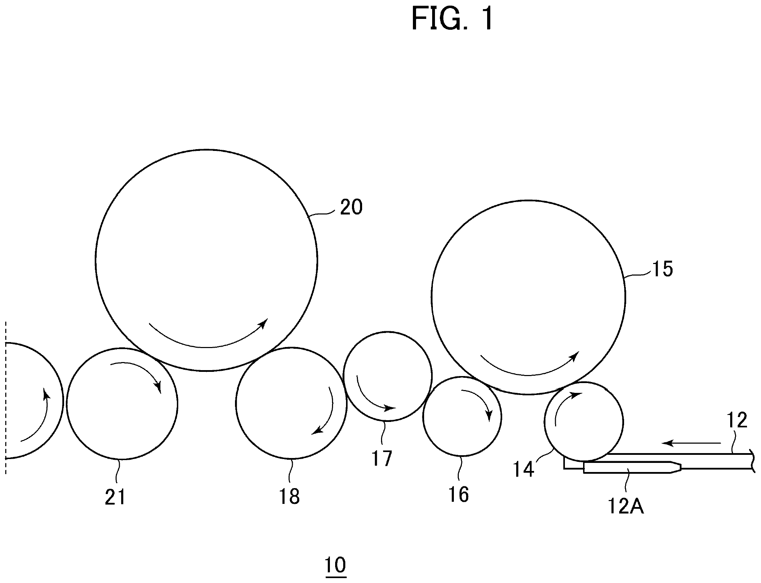

Hereafter, embodiments of the present invention are described with references to the accompanying drawings. Fig. 1 is a plan view of a labeling system adopting a heat-shrink device according to the first embodiment of the present invention.

The labeling system 10 of the first embodiment is a device that attaches a shrink label L made of a heat-shrinkable film to the outer periphery of an article such as a container V, and makes the shrink label L adhere to the outer periphery of the container V by utilizing heat shrinkage. For example, the container V is filled and capped by a filler and a capper provided upstream of the labeling system, and then supplied to the labeling system 10 via a supply conveyor 12. The supply conveyor 12 conveys the containers V in a single line and their pitches are adjusted by the screw conveyor 12A on the downstream side of the supply conveyor 12. The pitch-adjusted containers V are sequentially supplied to a supply wheel 14 that is arranged adjacent to the downstream end of the supply conveyor 12 and synchronously rotates with the screw conveyor 12A.

A shrink labeler 15 that synchronously rotates with the supply wheel 14 is arranged adjacent to the downstream side of the supply wheel 14 and the containers V are sequentially delivered from the supply wheel 14. In the shrink labeler 15, the shrink label L formed in a cylindrical shape is provided to surround the container V. The container V with the shrink label L provided on its outer periphery is delivered to a discharge wheel 16 that synchronously rotates with the shrink labeler 15 on its downstream side. The containers V are further delivered to a shrink wheel (heat shrink device) 20, which makes the shrink label L fit tightly around the outer shape of the container V by applying the heat shrinkage of the shrink label L, via an intermediate wheel 17 and a supply wheel 18 that synchronously rotate with each other.

As will be described later, the shrink wheel 20 includes a heating device for heating and shrinking the shrink label L provided around each container V, which are conveyed along the outer circumference of the wheel. The containers V with the shrink labels L tightly covering around the outer shape thereof are delivered to a discharge wheel 21 that is arranged downstream of the shrink wheel 20 and rotates synchronously with the shrink wheel 20. After that, the containers V are transported to a downstream processing device (not shown) such as a caser.

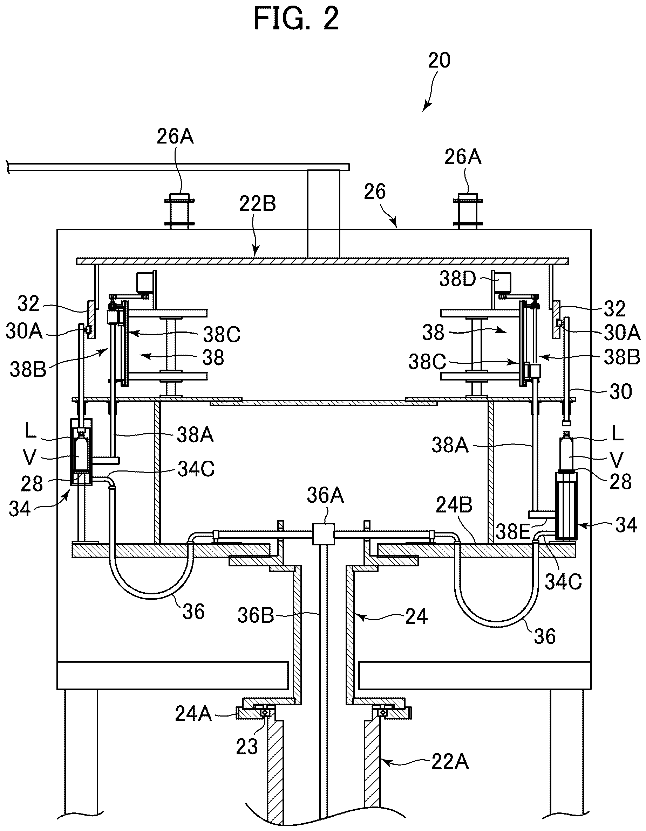

Fig. 2 is a vertical sectional view of the shrink wheel 20 of the present embodiment. The shrink wheel 20 includes a fixed base portion 22A and a fixed upper portion 22B fixed to a base, and a rotating portion 24 rotatably attached to the fixed base portion 22A via a bearing 23 or the like. The entire shrink wheel 20 is surrounded by a shell 26, and the rotating portion 24 is rotated by a drive mechanism (not shown) via a gear 24A provided on the outside of the shell 26. Furthermore, the shell 26 is provided with a duct 26A for discharging heating steam, which will be described later.

The rotating body 24 is provided with a rotating table 24B. Bottle stands (platforms) 28, on which is placed the container V delivered from the supply wheel 18, are positioned on the outer peripheral portion of the rotating body 24 at predetermined intervals along its circumference. Arranged immediately above each bottle stand 28 is a top locator 30 (container-supporting means) that holds from above the top surface of the container V placed on the bottle stand 28 and supports the container V together with the bottle stand 28. The top locator 30 is liftably held by the rotating body 24, and a cam follower 30A that engages with a cam 32 provided along the outer circumference of the fixed upper portion 22B is provided at the upper end of the top locator 30. Namely, the top locator 30 is moved together with the rotating body 24, and when the cam follower 30A moves up and down along the cam 32 the top locator 30 moves up and down, whereby the container V on the bottle base 28 is gripped or released in the vertical direction.

Each bottle stand 28 is provided with a heating cylinder 34 having an opening on the upper end to be able to accommodate a container V held on the bottle stand 28. The heating cylinder 34 includes a heating mechanism (heating means) for heating its interior. In the present embodiment, the heating mechanism supplies steam into the heating cylinder 34 through a flexible hose 36 connected to the heating cylinder 34. One end of each flexible hose 36 is connected to an injection nozzle 34C provided on a lower portion of the side surface of the heating cylinder 34, and the other end is radially connected to a rotary joint 36A disposed at the rotation center of the rotating body 24. A steam supply pipe 36B for supplying steam is connected below the rotary joint 36A. The steam supply pipe 36B is connected to an external steam generator (not shown) through a cavity provided along the rotation center of the rotating body 24 and the fixed base 22A (steam supply means).

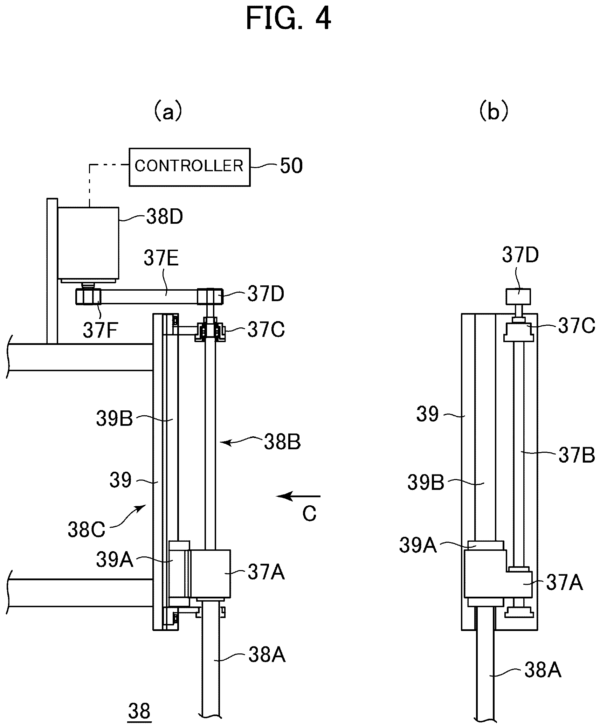

Each heating cylinder 34 is provided with an elevating mechanism 38 that raises and lowers the heating cylinder 34 relative to the bottle base 28. The elevating mechanism 38 includes a rod member 38A that is attached to the heating cylinder 34 and is liftably supported by the rotating body 24. The rod member 38A extends in the vertical direction. The upper end of the rod member 38A can be raised and lowered along the slider rail 38C extending in the vertical direction by the ball screw mechanism 38B. The ball screw mechanism 38B is driven by, for example, a servomotor 38D connected via a transmission belt, and each servomotor 38D is controlled by a controller 50 (see Fig. 4). Incidentally, the elevating mechanism (elevating means) 38 is provided at regular intervals along the outer circumference of the rotating body 24 corresponding to each bottle stand 28. As for the bottle stand 28 illustrated on the right side of Fig. 2, the heating cylinder 34 is lowered to the lowest position, the top locator 30 is raised, and the container V is in the released state. On the other hand, the bottle stand 28 on the left side of Fig. 2 has its top locator 30 lowered and the container V in the gripped state, such that, the heating cylinder 34 is raised to the highest position and the container V is completely housed inside the heating cylinder 34.

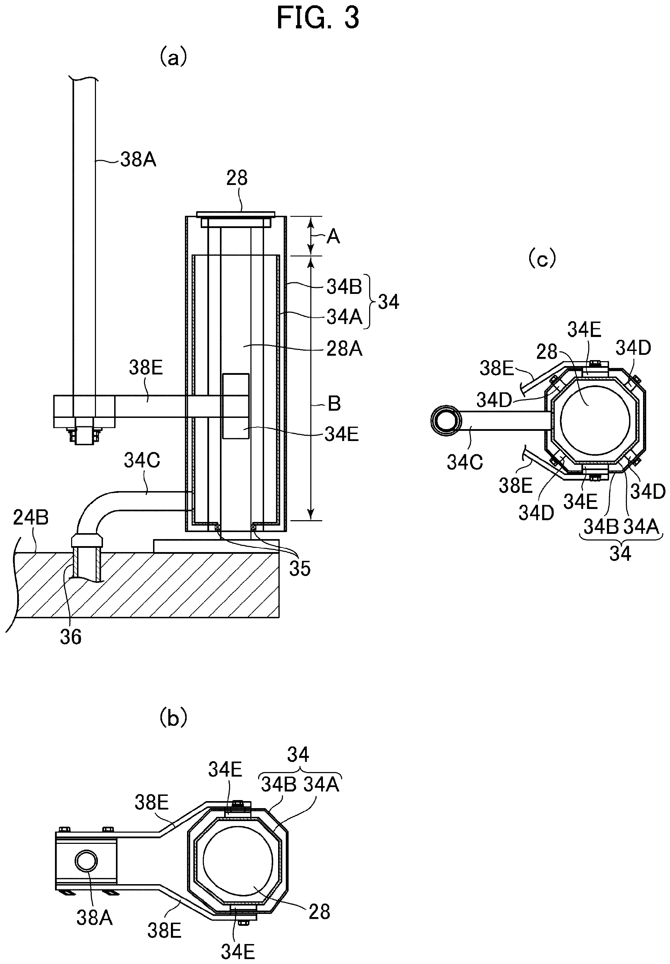

Fig. 3 is an enlarged vertical sectional view of the bottle stand 28 and the heating cylinder 34 of the present embodiment. Fig. 3(a) is a vertical cross-sectional view of the bottle base 28 and the heating cylinder 34 along the circumferential direction of the rotary table 24B. Fig. 3(b) is a top view of the bottle base 28 and the heating cylinder 34, and Fig. 3(c) is a plan view illustrating the arrangement of the injection nozzle 34C for injecting the heat steam into the heating cylinder 34. The structure of the heating cylinder 34 will be described in more detail with reference to Fig 3.

The bottle stand 28 is provided at the upper end of the support rod 28A, which is provided upright on the outer peripheral portion of the rotary table 24B. The bottle base 28 and its support rod 28A are arranged at positions corresponding to the inside of the heating cylinder 34. In the present embodiment, the heating cylinder 34 includes, for example, a double cylinder member of an inner cylinder 34A and an outer cylinder 34B. The inner cylinder 34A is arranged inside the outer cylinder 34B with a gap of a predetermined interval. The upper end of the outer cylinder 34B extends upward by a predetermined height from the upper end of the inner cylinder 34A, and the inside thereof provides the first heating portion A. The inside of the inner cylinder 34A provides the second heating portion B. Furthermore, the lower end of the outer cylinder 34B of the present embodiment extends slightly below the lower end of the inner cylinder 34A, and the inner cylinder 34A is completely housed in the outer cylinder 34B. Moreover, a seal member 35 for closing the support rod 28A and the inner cylinder 34A is attached to the lower end of the inner cylinder 34A to prevent steam in the inner cylinder 34A from leaking from the lower end. The steam leakage may also be reduced by narrowing the distance between the inner cylinder 34 and the support rod 28A without attaching the seal member 35. The seal member 35 may also be attached to the outer cylinder 34B instead of the inner cylinder 34A.

In the example of Fig. 3, both the inner cylinder 34A and the outer cylinder 34B have an octagonal cross section, and the inner cylinder 34A is fixed to the outer cylinder 34B using a fixture 34D such as a screw on each surface of the octagon. Furthermore, the inner cylinder 34A and the outer cylinder 34B are held on both sides by the holding arm 38E via the member 34E, and the holding arm 38E is fixed to the rod member 38A.

The details of the elevating mechanism 38 in the present embodiment will be described with reference to Fig. 4. Note that Fig. 4(a) is a side view of the elevating mechanism 38, and Fig. 4(b) illustrates a part of Fig. 4(a) viewed from the direction of arrow C.

The upper end of the rod member 38A that holds the heating cylinder 34 via the holding arm 38E is fixed to the nut block 37A of the ball screw mechanism 38B, and the nut block 37A is engaged with the screw portion 37B of the ball screw mechanism 38B. A cylindrical support portion without a screw is provided near the upper end portion of the screw portion 37B and is rotatably held by a support plate 39 fixed to the rotating body 24 via a bearing 37C. A toothed pulley 37D is attached to the upper end of the screw portion 37B and a timing belt 37E is entrained around the toothed pulley 37D and the toothed pulley 37F of the servomotor 38D, which is fixed to the rotating body 24.

Furthermore, the nut block 37A of the ball screw mechanism 38B is fixed to the slider 39A on the slider rail 38C attached to the support plate 39. The slider 39A slidably engages with the rail 39B attached vertically to the support plate 39. Namely, when the servomotor 38D rotates, the screw portion 37B is rotated via the belt transmission, and the nut block 37A screwed with the screw portion 37B is moved up and down along the rail 39B according to the rotational direction of the servomotor 38D. As a result, the rod member 38A attached to the nut block 37A moves up and down and the heating cylinder 34 is raised and lowered.

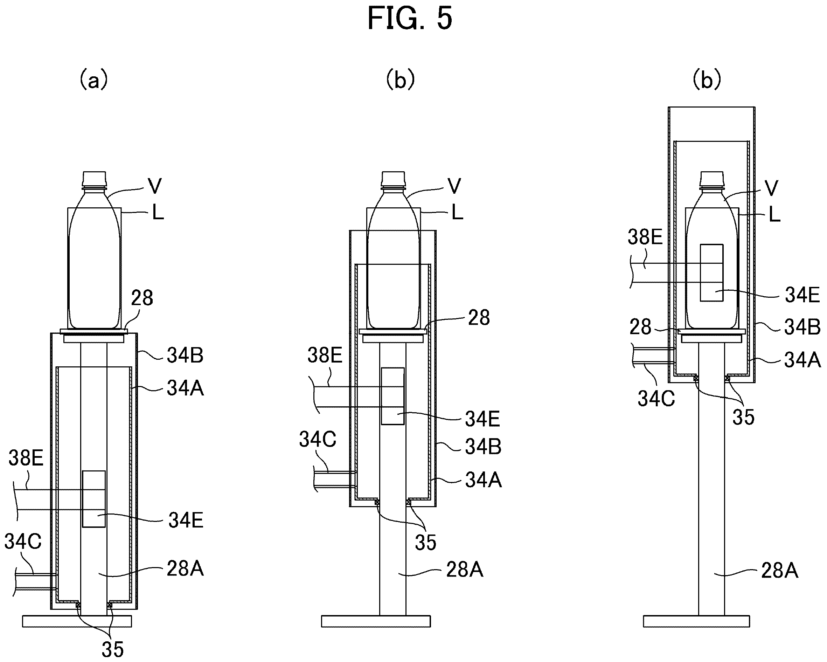

Fig. 5 is a side view illustrating an elevating operation of the heating cylinder 34 by the elevating mechanism 38. Fig. 5(a) illustrates a state in which the heating cylinder 34 is lowered to the lowest position. Fig. 5(b) illustrates a state in which the heating cylinder 34 is raised to an intermediate position, and Fig. 5(c) illustrates a state in which the heating cylinder 34 is raised to the highest position.

The state of Fig. 5(a) corresponds to the state immediately after the container V, on which the shrink label L is wound, is transferred from the supply wheel 18 to the shrink wheel 20. The top of the heating cylinder 34, which is the top of the outer cylinder 34B, is arranged at a position lower than the top surface of the bottle base 28, and the container V placed on the bottle base 28 is located outside the heating cylinder 34. The injection nozzle 34C, which penetrates the outer cylinder 34B, is attached near the lower end of the inner cylinder 34A, and from the tip of the injection nozzle 34C, for example, saturated water vapor is constantly injected into the inner cylinder 34A at a predetermined flow rate. The steam supplied to the inner cylinder 34A mainly flows upward along the inner peripheral surface of the inner cylinder 34A to heat the second heating portion B. When the steam reaches the upper end of the inner cylinder 34A, it rises along the inner peripheral surface of the outer cylinder 34B having a larger diameter and heats the first heating portion A. Thereafter, the steam is discharged from the top opening of the outer cylinder 34B to the outside of the heating cylinder 34. The steam released from the heating cylinder 34 is discharged to the outside of the shell 26 through, for example, the duct 26A. Note that the steam injected from the injection nozzle 34C is not limited to saturated steam, and may be superheated steam.

The container V transferred from the supply wheel 18 to the shrink wheel 20 is then secured to the bottle stand 28 by the lower end of the top locator 30 (not shown in Fig. 5) pressing against the top surface of the container V, which is lowered by the rotation of the rotating body 24. Furthermore, as illustrated in Fig. 5(b), the heating cylinder 34 is gradually raised by the elevating mechanism 38 and the container V on the bottle base 28 is raised until all of the container V (or all the labeling portions) is accommodated in the inner cylinder 34A, as illustrated in Fig. 5(c).

In the heating cylinder 34, the inside cylinder 34A provided with the outlet of the injection nozzle 34C, that is, the second heating portion B is maintained at a relatively high temperature (for example, about 100°C). The inside of the outer cylinder 34B above the upper end of the inner cylinder 34A, that is, the first heating portion A is maintained at a relatively low temperature (for example, 80°C). As illustrated in Fig. 5, the elevating mechanism 38 raises from below the heating cylinder 34 relative to the bottle base 28 to sequentially insert the container V into the outer cylinder 34B and the inner cylinder 34A in this order. Namely, due to the temperature difference between the inner cylinder 34A and the outer cylinder 34B above it, the shrink label L is initially shrunk at a low temperature and then shrunk at a high temperature. Furthermore, the heat shrinkage rate of the shrink label L is appropriately controlled to not cause wrinkles by adjusting the ascending speed of the heating cylinder 34 according to the shape and size of the container V and the characteristics (for example, material) of the shrink label L.

For example, since the bottle-shaped container V illustrated in Fig. 5 has a diameter that is substantially constant from the bottom to the body, the shrinkage amount of the shrink label L is small and its variance is also small. However, from the shoulder to the neck the diameter sharply decreases, thereby causing the shrink label L to shrink by a larger amount. Therefore, from the shoulder portion to the neck portion, the ascending speed of the heating cylinder 34 is reduced (including stopping) to lengthen the heating time for the first heating portion A. Furthermore, when the body has a dent, in order to increase the amount of shrinkage at the dent position, for example, the ascending speed in the vicinity of the dent height is reduced. Moreover, when the material of the shrink label L is a material that easily shrinks, it is possible to raise and lower the shrink label L at a speed faster than that of other labels to shorten the overall shrinkage time.

As described above, according to the first embodiment, a single container is housed in each heating cylinder that is maintained under substantially constant conditions for-the label shrinkage process so that it is possible to suppress the occurrence of shrinkage unevenness due to disturbances such as a variation in the number of containers discharged upstream of the process. Furthermore, even when the type of container or label is changed and the conditions for shrinking the label are changed, these changes can be dealt with by controlling the speed at which the heating cylinder is raised; thereby, with a simple configuration the amount of label shrinkage can be controlled according to the height of the container, and different lots can be easily handled.

Moreover, since each heating cylinder is moved up and down for each container to perform the shrinking process, the shrinking process can be continued even when the rotary transfer of the container is stopped by the emergency stop, such that normal shrinking process can be carried out by lowering the heating cylinder when the shrinking process is completed.

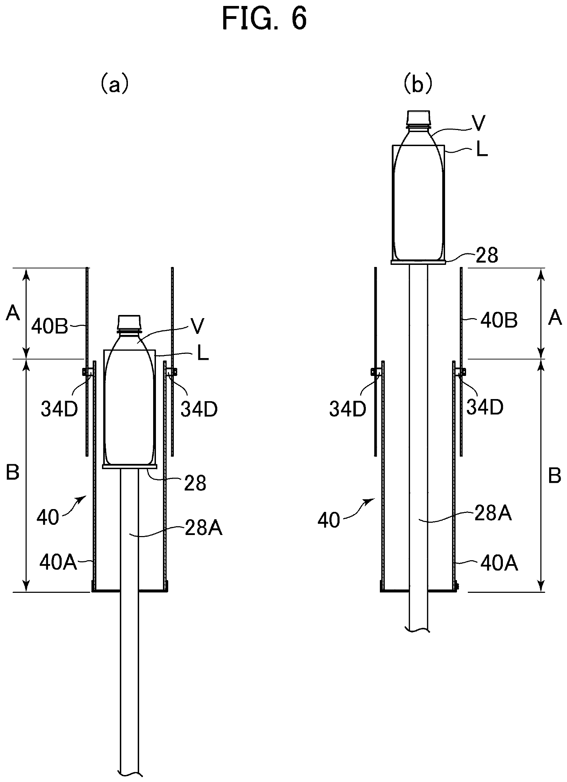

Next, with reference to Fig. 6, the heat-shrink device of the second embodiment will be described. Fig. 6 is a vertical cross-sectional view illustrating the configuration of a heating cylinder of the second embodiment. Fig. 6(a) illustrates a state in which the container V is completely housed in the heating cylinder and Fig. 6(b) illustrates a state in which the container V is completely located outside the heating cylinder.

In the second embodiment, the heating cylinder is fixed at a predetermined height, and the bottle stand is raised and lowered. The configuration of the heating cylinder of the second embodiment is slightly different from that of the first embodiment, but the other configurations are the same as those of the first embodiment. The lower end of the outer cylinder 34B of the heating cylinder 34 of the first embodiment extends slightly below the lower end of the inner cylinder 34A, and the inner cylinder 34A is completely housed in the outer cylinder 34B. On the other hand, the heating cylinder 40 of the second embodiment includes an inner cylinder 40A and an outer cylinder 40B and only the upper portion of the inner cylinder 40A is housed in the lower portion of the outer cylinder 40B so that the upper end of the outer cylinder 40B extends above the inner cylinder 40A. Note that the distance between the inner cylinder 40A and the outer cylinder 40B is fixed by the fixture 34D.

Immediately after the container V is transferred from the supply wheel 18 onto the bottle stand 28, the bottle stand 28 and the support rod 28A are raised, and as illustrated in Fig. 6(b), the container V is outside the heating cylinder 40. In the subsequent shrinking process, the bottle base 28 and the support rod 28A are lowered and the container V is inserted into the heating cylinder 40 from the bottom side. Fig. 6(a) illustrates a state in which the shoulder portion to the neck portion of the container V is heated in the first heating portion A, and the body portion of the container V is heated in the second heating portion B. After that, the bottle base 28 and the support rod 28A are further lowered, and the region from the shoulder portion to the neck portion is also heated in the second heating portion B. In the second embodiment, the support rod 28A may be raised and lowered, that is, the bottle base 28 may be raised and lowered with the same configuration as the elevating mechanism 38 of the first embodiment. As for the top locator 30, it may also adopt the same configuration as the elevating mechanism 38 of the first embodiment where a servomotor lifts and lower the top locator 30.

As described above, even when applying the heat-shrink device of the second embodiment, the same effect as that of the first embodiment can be obtained.

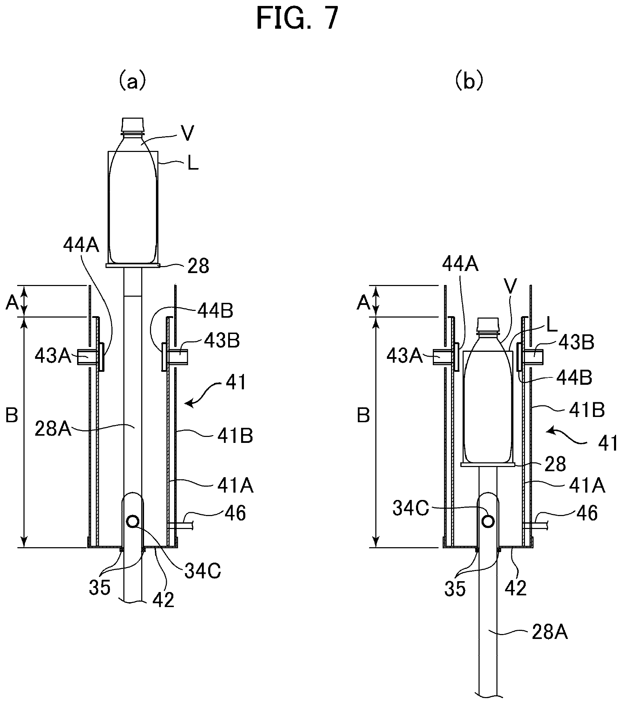

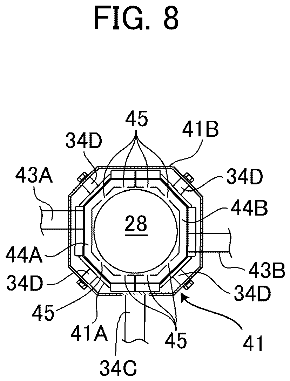

Next, the heat-shrink device of the third embodiment will be described with reference to Figs. 7 and 8. Fig. 7 is an enlarged vertical sectional view of the heating cylinder of the third embodiment, and Fig. 8 is an enlarged plan view of the heating cylinder of Fig. 7. Fig. 7 (a) illustrates a state in which the container V is completely located outside the heating cylinder, and Fig. 7 (b) shows a state in which the container V is completely housed in the heating cylinder. Note that the same reference numerals are used for the same configurations as those of the first or second embodiment, and the description thereof will be omitted.

The heat-shrink device of the third embodiment raises and lowers the bottle base 28 in the same manner as in the second embodiment. On the other hand, an inner cylinder 41A and an outer cylinder 41B of a heating cylinder 41 of the third embodiment share a bottom surface 42. The outer cylinder 41B extends upward from the inner cylinder 41B, the inside section of the outer cylinder 41B that is higher than the inner cylinder 41A provides the first heating portion A, and the inside of the inner cylinder 41A provides the second heating portion B. Furthermore, in the third embodiment, a heating mechanism for supplying steam is provided not only on the lower side of the heating cylinder 41 but also on the upper side. On the lower side, for example, an air supply mechanism is further provided as a cooling mechanism. The gap about the support rod 28A penetrating the bottom surface 42 may be sealed by the seal member 35 as in the first embodiment.

The upper heating mechanism is composed of, for example, two steam supply pipes 43A and 43B penetrating the outer cylinder 41B and the inner cylinder 41A, and manifolds 44A and 44B provided on the steam supply pipes 43A and 43B, respectively. The manifolds 44A and 44B are each arranged to surround the container V over approximately 180° along the inner peripheral wall of the inner cylinder 41A. The manifolds 44A and 44B are provided with a plurality of steam injection ports 45 facing inward along the inner circumference thereof.

On the other hand, the lower heating mechanism is composed of an injection nozzle 34C that communicates with the inner cylinder 41A and is connected to the steam supply pipe 36B, as in the first embodiment. Furthermore, the air supply mechanism provided on the lower side comprises an air supply pipe 46 communicating with the inside of the inner cylinder 41A, which is similar to the injection nozzle 34C.

As described above, the same effect as that of the first and second embodiments can be obtained by the heat-shrink device of the third embodiment. Furthermore, in the third embodiment, since the steam is injected inward from the steam injection ports located on the upper side, the steam can be directly blown to the shoulder portion of the container where the label needs to be shrunk relatively more so that the label can be shrunk more efficiently. Moreover, in the third embodiment, by injecting air into the lower part of the container, it is possible to suppress the excessive shrinkage of the label by lowering the temperature of the lower part, which may be heated for a longer time than the upper part of the container and cause excessive shrinkage.

Incidentally, in the third embodiment, the number of steam supply pipes and manifolds may be one or three or more. Furthermore, steam injection from the steam injection port and air injection from the air supply pipe may be performed at all times during production work, but the injection timing may be controlled according to the position in the heating cylinder of the container and the elapsed heating time.

Moreover, the heating cylinder is not limited to this embodiment. For example, although the double cylinder structure is adopted in the first and second embodiments, the temperature may be controlled by a single cylinder and holes provided on the side surface. The heating means is not limited to steam, and a configuration using a heater or a configuration using heated air is also possible, and superheated steam can be used instead of saturated steam.

Furthermore, although in the present embodiments a configuration of wheels that rotationally convey the containers are adopted as the shrink devices, other conveyors can be adopted as long as each container can be conveyed while being housed in an individual heating cylinder, such as a conveyor that conveys the container in a horizontal direction, for example, linearly. Instead of heat-shrinking while continuously transporting the container, heat-shrinking may be performed while intermittently transporting the container. Furthermore, the configuration for supporting the container is not limited to the configuration in which the container is held by the bottle stand and the top locator, and for example, a configuration that grips only the neck portion of the container may be adopted to suspend and support the container.

### [EXPLANATION OF REFERENCES]

10 labeling system
20 shrink wheel
24 rotating portion (transporting means)
28 bottle stands (container-supporting means)
30 top locator (container-supporting means)
34, 40, 41 heating cylinder
34A, 40A, 41A inner cylinder
34B, 40B, 41B outer cylinder
34C injection nozzle
36 a flexible hose
38 elevating mechanism (elevating means)
38D servomotor
43A, 43B steam supply pipe
44A, 44B manifold
45 steam injection port
50 controller
L label
V container

## Claims

1. A heat-shrink device (10) for a heat-shrink label (L), comprising:
a container-supporting means (28, 30) for supporting a container (V) provided with a heat-shrink label (L);
a heating cylinder (34) arranged below the container-supporting means (28, 30) and capable of accommodating a container (V) supported by the container supporting means (28, 30) ;
a heating means for heating the inside of the heating cylinder (34);
an elevating means (38) for relatively raising and lowering the container-supporting means (28, 30) and the heating cylinder (34); and
a control means (50) for controlling the elevating means (38) ;
the control means (50) being configured to relatively raise and lower the container-supporting means (28, 30) and the heating cylinder (34) so that the bottom of the container (V) is inserted from the upper end of the heating cylinder (34) by the elevating means (38), and thereby the container is positioned in the heating cylinder (34) for a predetermined time by controlling the speed of the elevating means (38) to heat shrink the label (L) provided on the container (V);
wherein the heating means comprises an injection nozzle (34C) that injects steam inside of the heating cylinder (34), and a steam supply means (22A) that supplies steam to the injection nozzle (34C);
**characterized in that** the heating cylinder (34) comprises an inner cylinder (34A), in which the outlet of the injection nozzle (34C) facing the inside is provided, and an outer cylinder (34B), in which the upper end extends above the inner cylinder (34A) covering at least the upper part of the inner cylinder (34B) and which is arranged at a distance from the inner cylinder (34A).

2. A heat-shrink method for a heat-shrink label (L) realized by means of the heat-shrink device (10) of claim 1, comprising:
moving the container-supporting means (28, 30) and the heating cylinder (34) relatively up and down so that the bottom of the container supported by the container-supporting means (28, 30) is inserted from the upper end of the heating cylinder (34); and
by controlling the ascending/descending speed, the container is positioned in the heating cylinder (34) for a predetermined time so that the label provided on the container is thermally shrunk.

## Patentansprüche

1. Wärmeschrumpfvorrichtung (10) für ein Wärmeschrumpfetikett (L), umfassend:
ein Behälterträgermittel (28, 30) zum Tragen eines Behälters (V), der mit einem Wärmeschrumpfetikett (L) versehen ist;
einen Heizzylinder (34), der unterhalb des Behälterträgermittels (28, 30) angeordnet und in der Lage ist, einen von dem Behälterträgermittel (28, 30) getragenen Behälter (V) aufzunehmen;
ein Heizmittel zum Erwärmen des Inneren des Heizzylinders (34);
ein Hebemittel (38) zum relativen Anheben und Absenken des Behälterträgermittels (28, 30) und des Heizzylinders (34); und
ein Steuermittel (50) zum Steuern des Hebemittels (38);
wobei das Steuermittel (50) so konfiguriert ist, dass es das Behälterträgermittel (28, 30) und den Heizzylinder (34) relativ anhebt und absenkt, so dass der Boden des Behälters (V) von dem oberen Ende des Heizzylinders (34) durch das Hebemittel (38) eingeführt wird, und dadurch der Behälter für eine vorbestimmte Zeit in dem Heizzylinder (34) positioniert wird, indem die Geschwindigkeit des Hebemittels (38) gesteuert wird, um das auf dem Behälter (V) vorgesehene Etikett (L) durch Wärme zu schrumpfen;
wobei das Heizmittel eine Einspritzdüse (34C) umfasst, die Dampf in das Innere des Heizzylinders (34) einspritzt, und ein Dampfversorgungsmittel (22A), das die Einspritzdüse (34C) mit Dampf versorgt;
**dadurch gekennzeichnet, dass** der Heizzylinder (34) einen inneren Zylinder (34A) umfasst, in dem der Auslass der Einspritzdüse (34C), der nach innen gerichtet ist, vorgesehen ist, und einen äußeren Zylinder (34B), dessen oberes Ende sich oberhalb des inneren Zylinders (34A) erstreckt, wobei es zumindest den oberen Teil des inneren Zylinders (34B) abdeckt, und der in einem Abstand von dem inneren Zylinder (34A) angeordnet ist.

2. Wärmeschrumpfverfahren für ein Wärmeschrumpfetikett (L), das mittels der Wärmeschrumpfvorrichtung (10) nach Anspruch 1 realisiert wird, umfassend:
Bewegen des Behälterträgermittels (28, 30) und des Heizzylinders (34) relativ nach oben und unten, so dass der Boden des von dem Behälterträgermittel (28, 30) getragenen Behälters von dem oberen Ende des Heizzylinders (34) aus eingeführt wird; und
durch Steuern der Aufwärts-/Abwärtsgeschwindigkeit wird der Behälter für eine vorbestimmte Zeit in dem Heizzylinder (34) positioniert, so dass das auf dem Behälter vorgesehene Etikett thermisch geschrumpft wird.

## Revendications

1. Dispositif de thermorétraction (10) pour une étiquette (L) thermorétractable, comprenant :
un moyen de support de récipient (28, 30) pour supporter un récipient (V) muni d'une étiquette (L) thermorétractable ;
un cylindre chauffant (34) disposé sous le moyen de support de récipient (28, 30) et apte à recevoir un récipient (V) supporté par le moyen de support de récipient (28, 30) ;
un moyen de chauffage pour chauffer l'intérieur du cylindre chauffant (34) ;
un moyen d'élévation (38) pour soulever et abaisser relativement le moyen de support de récipient (28, 30) et le cylindre chauffant (34) ; et
un moyen de commande (50) pour commander le moyen d'élévation (38) ;
le moyen de commande (50) étant configuré pour soulever et abaisser relativement le moyen de support de récipient (28, 30) et le cylindre chauffant (34) de manière à ce que le fond du récipient (V) soit inséré depuis l'extrémité supérieure du cylindre chauffant (34) par le moyen d'élévation (38), et le récipient est ainsi positionné dans le cylindre chauffant (34) pendant une durée prédéterminée en commandant la vitesse du moyen d'élévation (38) pour rétracter à chaud l'étiquette (L) apposée sur le récipient (V) ;
dans lequel le moyen de chauffage comprend une buse d'injection (34C) qui injecte de la vapeur à l'intérieur du cylindre chauffant (34), et un moyen de fourniture de vapeur (22A) qui fournit de la vapeur à la buse d'injection (34C) ;
**caractérisé en ce que** le cylindre chauffant (34) comprend un cylindre interne (34A), dans lequel est prévue la sortie de la buse d'injection (34C) orientée vers l'intérieur, et un cylindre (34B) externe, dont l'extrémité supérieure s'étend au-dessus du cylindre interne (34A), couvrant au moins la partie supérieure du cylindre (34B) interne, et qui est disposé à une certaine distance du cylindre interne (34A).

2. Procédé de thermorétraction d'une étiquette (L) thermorétractable réalisé au moyen du dispositif de thermorétraction (10) de la revendication 1, comprenant :
le déplacement du moyen de support de récipient (28, 30) et du cylindre chauffant (34) relativement vers le haut et vers le bas de manière à ce que le fond du récipient supporté par le moyen de support de récipient (28, 30) soit inséré depuis l'extrémité supérieure du cylindre chauffant (34) ; et
en commandant la vitesse de montée/descente, le récipient est positionné dans le cylindre chauffant (34) pendant une durée prédéterminée de manière à ce que l'étiquette apposée sur le récipient soit thermorétractée.
